# NEW EUROPEAN PATENT SPECIFICATION

(11) **EP 0 549 268 B2**
(45) Date of publication and mention of the opposition decision: **30.10.2002**
(45) Mention of the grant of the patent: 29.04.1998
(21) Application number: 92311569.5
(22) Date of filing: 17.12.1992
(51) Int. Cl.: C08L 77/00, C08L 77/02, C08L 77/06, C08L 71/12, C08K 5/09

(54) **Resin composition of polyphenylene ether and polyamide**
Harzzusammensetzung aus Polyphenylenäther und Polyamid
Composition de résine à base de polyphénylène-éther et de polyamide

(30) Priority: 17.12.1991 JP 35322691
(43) Date of publication of application: 30.06.1993
(73) Proprietor: MITSUBISHI GAS CHEMICAL COMPANY, INC., Tokyo 100-0005 (JP)
(72) Inventor: Norisue, Yasumasa, c/o Plastics Center, Mitsubishi, Hiratsuka-shi, Kanagawa-ken (JP); Shimaoka, Goro, c/o Plastics Center, Mitsubishi, Hiratsuka-shi, Kanagawa-ken (JP); Uno, Hideo, c/o Plastics Center, Mitsubishi, Hiratsuka-shi, Kanagawa-ken (JP)
(74) Representative: Cresswell, Thomas Anthony

(56) References cited:
- EP-A- 0 335 506
- EP-A- 0 364 693
- EP-A- 0 382 547
- EP-A- 0 394 055
- WO-A-85/05372
- WO-A-87/05304
- PATENT ABSTRACTS OF JAPAN vol. 013, no. 249 (C-605) 9 June 1989 & JP-A-01 054 068 (KAO CORP) 1 March 1989
- PATENT ABSTRACTS OF JAPAN vol. 009, no. 108 (C-280) 11 May 1985 & JP-A-60 001 245 (SEKISUI KAGAKU KOGYO KK) 7 January 1985

## Description

The present invention relates to a resin composition comprising polyphenylene ether and polyamide. More specifically, it relates to an industrially useful resin composition which is provided with flowability, heat resistance, solvent resistance, dimensional stability, and further releasability from a mold and recycling capability on the basis of advantages of polyphenylene ether (PPE) and polyamide and which can be used for manufacturing automobile parts such as a wheel cap, a fender, a bumper and a spoiler, or housings for office automation machines.

Polyphenylene ether is a resin excellent in heat resistance, rigidity and electric properties, and is a polymer material useful as an engineering plastic. Since, however, polyphenylene ether is poor in moldability, it is generally used as a resin composition with polystyrene. However, it is well known that this resin composition is poor in solvent resistance, and it is very difficult to impart this resin composition with both moldability and heat resistance.

It has been recently revealed that a resin composition excellent in such properties as solvent resistance, moldability, heat resistance, etc., can be obtained when polyphenylene ether and polyamide which are incompatible with each other are melt-kneaded in the presence of a compatibility-providing agent (see Japanese Patent Publications No. 11,966/1985 and No. 22,305/1989).

EP-A-0394055 relates to a thermoplastic composition comprising a polyphenylene ether, a polyamide which may be e.g. nylon-6,6 or nylon-6, a paint adhesion improver and a compatibilising agent.

WO85/05372 describes a resin composition comprising a polyphenylene ether resin, a polyamide resin which may be e.g. polyamide-6,6 or polyamide-6, and a polycarboxylic acid or a derivative thereof.

As a composition containing polyphenylene ether and polyamide, there are known a composition containing polyphenylene ether and nylon-6 and a composition containing polyphenylene ether and nylon-6,6.

The composition containing polyphenylene ether and nylon-6,6 has advantages that it has higher heat resistance and shows less water absorption than the composition containing polyphenylene ether and nylon-6. However, the composition containing polyphenylene ether and nylon-6,6 has defects in that it is poor in moldability and that it shows a poor weld appearance. Concerning heat resistance, it can be said that the composition containing polyphenylene ether and nylon-6,6 deteriorates less with heat aging-by at least 150°C compared with the composition containing polyphenylene ether and nylon-6.

It is an object of the present invention to provide a novel resin composition comprising polyphenylene ether and polyamide.

It is another object of the present invention to provide a novel resin composition which is provided with a variety of excellent advantages of a composition containing polyphenylene ether and nylon-6,6 such as excellent flowability, heat resistance, solvent resistance and dimensional stability and which also shows excellent moldability and a good weld appearance.

It is further another object of the present invention to provide a resin composition which is excellent in mold release characteristics and moldability in that it shows little resistance to release from a mold and that it gives little deformation to a molded article when the article having a complicated form is molded and that its molding time is small.

It is still further another object of the present invention to provide a resin composition which is excellent in recycling capability in that it shows no or little decrease in strength when recycled for resource saving and energy saving, unless it is recycled too many times.

Other objects and advantages of the present invention will be apparent from the following description.

According to the present invention, the above objects and advantages of the present invention are achieved, first, by a polyphenylene ether/polyamide resin composition (hereinafter referred to as "first resin composition") comprising:
(A) polyphenylene ether modified with an unsaturated carboxylic acid having (a) ethylenically unsaturated double bond and (b) either a carboxyl group or an acid anhydride group in the molecule,
(B) nylon-6,6 and
(C) nylon-6,
on the basis of the total amount of the components (A), (B) and (C), the amount of the component (A) being 20 to 70 % by weight and the total amount of the components (B) and (C) being 30 to 80 % by weight; and the amount of the component (C) being 20 to 80 parts by weight, per 100 parts by weight of the componen(B), and wherein the relative viscosity of (B) and (C), measured in 98% sulphuric acid is from 2.2 to 3.2.

The polyphenylene ether, before the modification, used in the present invention preferably includes polyphenylene ethers obtainable by polycondensation of at least one monocyclic phenol of the formula (1), 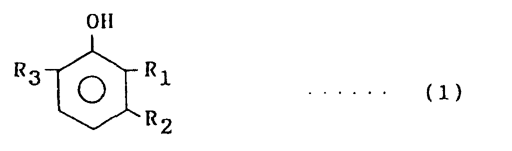 wherein R₁ is a lower alkyl group having 1 to 3 carbon atoms, and each of R₂ and R₃ is, independently of other, a hydrogen atom or a lower alkyl group having 1 to 3 carbon atoms,
and vinyl aromatic compound graft copolymers obtainable by grafting vinyl aromatic compound(s) onto the above polyphenylene ethers.

The polyphenylene ether may be a homopolymer or copolymer. The monocyclic phenols of the above formula (1) include 2,6-dimethylphenol, 2,6-diethylphenol, 2,6-dipropylphenol, 2-methyl-6-ethylphenol, 2-methyl-6-propylphenol, 2-ethyl-6-propylphenol, o-cresol, 2,3-dimethylphenol, 2,3-diethylphenol, 2,3-dipropylphenol, 2-methyl-3-ethylphenol, 2-methyl-3-propylphenol, 2-ethyl-3-methylphenol, 2-ethyl-3-propylphenol, 2-propyl-3-methylphenol, 2-propyl-3-ethylphenol, 2,3,6-trimethylphenol, 2,3,6-triethylphenol, 2,3,6-tripropylphenol, 2,6-dimethyl-3-ethylphenol and 2,6-dimethyl-3-propylphenol.

The polyphenylene ethers obtained by the polycondensation of at least one of the above phenols include poly (2,6-dimethyl-1,4-phenylene)ether, poly(2,6-diethyl-1,4-phenylene)ether, poly(2,6-dipropyl-1,4-phenylene)ether, poly (2-methyl-6-ethyl-1,4-phenylene)ether, poly(2-methyl-6-propyl-1,4-phenylene)ether, poly(2-ethyl-6-propyl-1,4-phenylene)ether, a 2,6-dimethylphenol/2,3,6-trimethylphenol copolymer, a 26-dimethylphenol/2,3,6-triethylphenol copolymer, a 2,6-diethylphenol/2,3,6-trimethylphenol copolymer, a 2,6-dipropylphenol/2,3,6-trimethylphenol copolymer, a graft copolymer obtained by grafting styrene onto poly(2,6-dimethyl-1,4-phenylene)ether, and a graft copolymer obtained by grafting styrene onto 2,6-dimethylphenol.

Among the above polyphenylene ethers, particularly preferred are poly(2,6-dimethyl-1,4-phenylene)ether and a 2,6-dimethylphenol/2,3,6-trimethylphenol copolymer. The intrinsic viscosity of the polyphenylene ether, measured in chloroform at 25°C, is preferably from 0.1 to 0.7 dl/g, more preferably from 0.3 to 0.6 dl/g. When the above intrinsic viscosity of the polyphenylene ether is less than 0.1 dl/g, the resultant composition is liable to be fragile. When it exceeds 0.7 dl/g, the resultant resin composition greatly tends to show poor flowability.

The modifier used for the modification of the above polyphenylene ether in the present invention is selected from unsaturated carboxylic acids having (a) ethylenically unsaturated double bond and (b) either a carboxyl group or an acid anhydride group in the molecule.

The above unsaturated carboxylic acids preferably include α,β-unsaturated dicarboxylic acids, α,β-unsaturated monocarboxylic acids and anhydrides of these.

Specific examples of the α,β-unsaturated dicarboxylic acids include maleic acid, chloromaleic acid, fumaric acid, citraconic acid and itaconic acid. Specific examples of the α,β-unsaturated monocarboxylic acids include acrylic acid, butenoic acid, crotonic acid, vinylacetic acid, methacrylic acid, pentenoic acid and angelic acid. Further, anhydrides of these α,β-unsaturated dicarboxylic acids and α,β-unsaturated monocarboxylic acids are used.

Among the above modifiers, preferred are maleic acid, fumaric acid, acrylic acid, methacrylic acid and maleic anhydride, and particularly preferred is maleic anhydride. The above unsaturated dicarboxylic acids, unsaturated monocarboxylic acids and anhydrides thereof may be used alone or in combination.

The above modifier is used preferably in an amount of from 0.01 to 10 parts by weight, more preferably from 0.1 to 3 parts by weight, per 100 parts by weight of the polyphenylene ether. When the amount of the modifier is outside the above range, the compatibility between the polyphenylene ether and nylon is poor, and as a result, the resultant resin composition is undesirably fragile.

The modified polyphenylene ether (A) used in the present invention can be prepared, for example, by any one of the following methods. In one method, the above polyphenylene ether and modifier are allowed to react by melt-kneading them in a roll mill, a Banbury mixer or an extruder at a temperature between 150°C and 350°C. In another method, the polyphenylene ether and modifier are allowed to react under heat in a solvent such as benzene, toluene or xylene. For easily proceeding with a modification reaction in these methods, the reaction system may contain a radical initiator selected from organic peroxides such as benzoyl peroxide, di-tert-butyl peroxide, dicumyl peroxide and tert-butylperoxybenzoate and azo compounds such as azobisisobutyronitrile and azobisisovaleronitrile.

The nylon-6,6 (B) used in the resin composition of the present invention is substantially composed of a recurring unit of the formula (2).

(̵CO(CH₂)₄CONH(CH₂)₆NH)̵ (2)

The above nylon-6,6 (B) can be obtained, for example, by condensation of hexamethylenediamine having the formula of H₂N-(CH₂)₆-NH₂ and either adipic acid having the formula of HOOC-(CH₂)₄-COOH or adipic acid ester having the formula of ROOC-(CH₂)₄-COOR (in which each of Rs is methyl, ethyl or propyl), or by condensation of adipic acid and diisocyanate having the formula of OCN-(CH₂)₆-NCO.

The relative viscosity (ηr) of the above nylon-6,6, measured in 98 % sulfuric acid, is from 2.2 to 3.2, preferably from 2.4 to 3.0. When this relative viscosity is less than 2.2, the resultant resin composition undesirably shows low strength. When it exceeds 3.2, the resultant resin composition undesirably shows poor moldability.

The nylon-6 (C) used in the resin composition of the present invention is obtained by ring-opening polymerization of ε-caprolactam, and is substantially composed of a recurring unit of the formula (3).

(̵NH(CH₂)₅CO)̵ (3)

The relative viscosity (ηr) of the above nylon-6, measured in 98 % sulfuric acid, is from 2.2 to 3.2, preferably from 2.3 to 3.0. When this relative viscosity is less than 2.2, the resultant resin composition is undesirably liable to show low strength and low heat resistance. When it exceeds 3.2, undesirably, the resultant resin composition is liable to show poor moldability and the effect on improvement of the appearance of a weld portion decreases.

The above resin composition of the present invention comprises the above components (A), (B) and (C), and these components (A), (B) and (C) are contained in the following ratios.

On the basis of the total amount of the components (A), (B) and (C), the amount of the component (A) is from 20 to 70 % by weight, and the total amount of the components (B) and (C) is from 30 to 80 % by weight. The amount of the component (C) per 100 parts by weight of the component (B) is from 20 to 80 parts by weight. Further, on the basis of the total amount of the components (A), (B) and (C), the amount of the component (A) is preferably from 30 to 60 % by weight, and the total amount of the components (B) and (C) is preferably from 40 to 70 % by weight.

When the amount of the nylon-6 as the component (C) is less than 10 parts by weight, undesirably, there is obtained little effect on improvement of the moldability and weld appearance. When it is more than 100 parts by weight, the resultant resin composition undesirably shows decreased heat resistance.

According to the present invention, there is further provided a resin composition which shows lower resistance to release from a mold and a lower molding time than the above resin composition of the present invention.

That is, according to the present invention, there is also provided a polyphenylene ether/polyamide resin composition (hereinafter referred to as "second resin composition") comprising:
(A) polyphenylene ether modified with an unsaturated carboxylic acid having (a) ethylenically unsaturated double bond and (b) either carboxyl group or acid anhydride group in the molecule,
(B) nylon-6,6,
(C) nylon-6, and
(D) montanic acid metal salt,
on the basis of the total amount of the components (A), (B) and (C), the amount of the component (A) being from 20 to 70 % by weight and the total amount of the components (B) and (C) being from 30 to 80 % by weight; the amount of the component (C) per 100 parts by weight of the component (B) being from 20 to 80 parts by weight; and the amount of the component (D) per 100 parts by weight of the total amount of the components (A), (B) and (C) being from 0.1 to 3 parts by weight.

The above components (A), (B) and (C) are the same as those components which have been described concerning the first resin composition of the present invention.

The montanic acid metal salt used as the component (D) in the second resin composition of the present invention includes sodium montanate, potassium montanate, lithium montanate, calcium montanate, zinc montanate, barium montanate and aluminum montanate. Among these, sodium montanate is preferred in view of an effect and easiness in industrial availability.

The second resin composition of the present invention comprises the above components (A), (B), (C) and (D), and these components are contained in the following ratios

On the basis of the total amount of the components (A), (B) and (C), the amount of the component (A) is from 20 to 70 % by weight and the total amount of the components (B) and (C) is from 30 to 80 % by weight. The amount of the component (C) per 100 parts by weight of the component (B) is from 20 to 80 parts by weight, and the amount of the component (D) per 100 parts by weight of the total amount of the components (A), (B) and (C) is from 0.1 to 3 parts by weight.

Further, on the basis of the total amount of the components (A), (B) and (C), the amount of the component (A) is preferably from 30 to 60 % by weight, and the total amount of the components (B) and (C) is preferably from 40 to 70 % by weight. The amount of the component (D) per 100 parts by weight of the total amount of the components (A), (B) and (C) is preferably from 0.2 to 1 part by weight. When the amount of nylon-6 as the component (C) is less than 10 parts by weight, undesirably, there is obtained little effect on improvement of the moldability and weld appearance. When it is more than 100 parts by weight, the resultant resin composition undesirably shows decreased heat resistance. When the amount of montanic acid metal salt as the component (D) is less than 0.1 part by weight, there is obtained little effect on improvement of the mold release characteristics. When it exceeds 3 parts by weight, undesirably, the desired physical properties deteriorate.

The first and second compositions of the present invention may contain an elastomer as required, and in many cases, the incorporation of an elastomer is preferred.

The above elastomer is an elastomer in a general sense, and refers to those defined at pages 71 to 78 of "Properties and Structures of Polymers" by A. V. Tobolsky (John Willy & Sons, Inc., 1960). That is, the elastomer means polymers having a Young's modulus of from 10⁵ to 10⁹ dynes/cm² (0.1 to 1,020 kg/cm²) at room temperature.

Specific examples of the above elastomer include a styrene-butadiene random copolymer, a styrene-butadiene block copolymer, a styrene-isoprene block copolymer, a styrene-butadiene triblock copolymer in which the double bond. of the polybutadiene portion is hydrogenated, a styrene-isoprene triblock copolymer in which the double bond of the polyisoprene is hydrogenated, nitrile rubber, an ethylene-propylene copolymer, an ethylene-propylene-diene copolymer (EPDM), Thiokol rubbers, polysulfide rubber, acrylic acid rubber, polyurethane rubber, a graft polymer of butyl rubber and polyethylene, polyester elastomer and polyamide elastomer.

Among the above elastomers, preferred are triblock copolymers, particularly A-B-A' triblock copolymers. In these block copolymers, the terminal blocks, A and A', stand for vinyl-containing aromatic hydrocarbon polymer blocks, and B stands for a conjugated diene polymer block or a conjugated diene polymer block whose double bonds are mostly hydrogenated. The molecular weight of the B block is preferably larger than the total molecular weight of the A and A' blocks. The terminal blocks, A and A', may be the same or different, and each of these blocks is a thermoplastic homopolymer or copolymer derived from a vinyl-containing aromatic compound whose aromatic portion may be monocyclic or polycyclic.

The above vinyl-containing aromatic compound includes styrene, α-methylstyrene, vinyltoluene, vinylxylene, ethylvinylxylene, vinylnaphthalene and mixtures of these. The central block, B, includes elastomeric polymers derived from conjugated diene-containing hydrocarbons such as 1,3-butadiene, 2,3-dimethylbutadiene, isoprene, 1,3-pentadiene and mixtures of these, and elastomeric polymers whose double bonds are mostly hydrogenated.

The weight average molecular weight of each of the terminal blocks, A and A', is preferably approximately 5,000 to 50,000, and the weight average molecular weight of the central block, B, is preferably approximately 25,000 to 1,500,000.

The amount of the above elastomer based on the polyphenylene ether is preferably from 2 to 50 % by weight, more preferably from 5 to 40 % by weight. When this amount is less than 2 % by weight, there is obtained little effect on the improvement of impact strength. When it is more than 50 % by weight, undesirably, the resultant resin composition shows a decrease in strength and heat resistance.

The resin compositions of the present invention may further contain other resin, a variety of additives such as a flame retardant, a flame retardant aid, a stabilizer, an ultraviolet light absorber, a plasticizer and a lubricant, a pigment, a filler and other component as required, The above "other" resin includes a polystyrene-containing resin, an epoxy resin, a polycarbonate resin, a polyester resin, polysulfone and polyphenylene sulfide.

The first and second resin compositions of the present invention can be produced by melt-mixing the above essential components and the above optional components. The temperature for the above melt-mixing is preferably between 230°C and 340°C, more preferably between 250°C and 320°C. The melt-mixing is carried out with any one of an extruder, a kneader, a Banbury mixer and a roll.

The first and second resin compositions of the present invention have heat resistance, water absorption properties and heat aging properties equivalent to those of a resin composition of polyphenylene ether and nylon-6,6, and moldability, weld appearance and strength equivalent to those of a resin composition of polyphenylene ether and nylon-6. Further, the second resin composition of the present invention is excellent in releasability from a mold and recycling capability.

The polyphenylene ether-containing resin compositions of the present invention will be described further in detail by reference to Referential Example, Examples and Comparative Examples.

### Referential Example 1

450 Grams of a hydrogenated styrene-butadiene-styrene type elastomer (Kraton G1651, supplied by Shell Chemical Co.) and 24 g of maleic anhydride were added to 3 kg of a 2,6-dimethylphenol polymer having an intrinsic viscosity, measured in chloroform at 25°C, of 0.47 (dl/g), and these components were mixed with a Henschel mixer. The resultant mixture was melt-kneaded in a twin-screw extruder at a temperature of from 300 to 320°C, and pelletized to give maleic anhydride-modified polyphenylene ether.

### Example 1

40 Parts by weight of the pellets of the maleic anhydride-modified polyphenylene ether obtained in Referential Example 1, 40 parts by weight of nylon-6,6 (Amilan CM-3007-N, a relative viscosity in 98 % sulfuric acid ηᵣ = 2.70, supplied by Toray Industries, Inc.) and 20 parts by weight of nylon-6 (Amilan CM-1017, a relative viscosity in 98 % sulfuric acid ηᵣ= 2.65, supplied by Toray Industries, Inc.) were mixed, and the resultant mixture was melt-kneaded and pelletized with a twin-screw extruder at from 240 to 300°C to obtain pellets. The pellets were injection-molded to obtain 3.2 mm (1/8 inch) thick dumbbell test pieces for tensile test and dumbbell test pieces having the same thickness and a weld portion (hereinafter referred to as "weld dumbbell"). These test pieces were measured for tensile strength, elongation and a depth of a weld portion. Further, the dumbbell test pieces were subjected to heat aging test at 120°C and 160°C, and then measured for tensile strength and elongation. Tables 1 and 2 show the results.

### Comparative Example 1

40 Parts by weight of the pellets of the maleic anhydride-modified polyphenylene ether obtained in Referential Example 1 and 60 parts by weight of nylon-6,6 (Amilan CM-3007-N, supplied by Toray Industries, Inc.) were mixed, and the resultant mixture was melt-kneaded and pelletized with a twin-screw extruder at from 240 to 300°C to obtain pellets. The pellets were injection-molded to prepare test pieces in the same manner as in Example 1, and the test pieces were measured for their physical properties in the same manner as in Example 1. Tables 1 and 2 show the results.

### Comparative Example 2

40 Parts by weight of the pellets of the maleic anhydride-modified polyphenylene ether obtained in Referential Example 1, 20 parts by weight of nylon-6,6 (Amilan CM-3007-N, supplied by Toray Industries, Inc.) and 40 parts by weight of nylon-6 (Amilan CM-1017, supplied by Toray Industries, Inc.) were mixed, and the resultant mixture was melt-kneaded and pelletized with a twin-screw extruder at from 240 to 300°C to obtain pellets. The pellets were injection-molded to prepare test pieces in the same manner as in Example 1, and the test pieces were measured for their physical properties in the same manner as in Example 1. Tables 1 and 2 show the results.

### Comparative Example 3

40 Parts by weight of the pellets of the maleic anhydride-modified polyphenylene ether obtained in Referential Example 1, 57 parts by weight of nylon-6,6 (Amilan CM-3007-N, supplied by Toray Industries, Inc.) and 3 parts by weight of nylon-6 (Amilan CM-1017, supplied by Toray Industries, Inc.) were mixed, and the resultant mixture was melt-kneaded and pelletized with a twin-screw extruder at from 240 to 300°C to obtain pellets. The pellets were injection-molded to prepare test pieces in the same manner as in Example 1, and the test pieces were measured for their physical properties in the same manner as in Example 1. Tables 1 and 3 show the results.

### Example 2

40 Parts by weight of the pellets of the maleic anhydride-modified polyphenylene ether obtained in Referential Example 1, 45 parts by weight of nylon-6,6 (Amilan CM-3007-N, supplied by Toray Industries, Inc.) and 15 parts by weight of nylon-6 (Amilan CM-1017, supplied by Toray Industries, Inc.) were mixed, and the resultant mixture was melt-kneaded and pelletized with a twin-screw extruder at from 240 to 300°C to obtain pellets. The pellets were injection-molded to prepare test pieces in the same manner as in Example 1, and the test pieces were measured for their physical properties in the same manner as in Example 1. Tables 1 and 3 show the results.

### Example 3

40 Parts by weight of the pellets of the maleic anhydride-modified polyphenylene ether obtained in Referential Example 1, 35 parts by weight of nylon-6,6 (Amilan CM-3007-N, supplied by Toray Industries, Inc.) and 25 parts by weight of nylon-6 (Amilan CM-1017, supplied by Toray Industries, Inc.) were mixed, and the resultant mixture was melt-kneaded and pelletized with a twin-screw extruder at from 240 to 300°C to obtain pellets. The pellets were injection-molded to prepare test pieces in the same mariner as in Example 1, and the test pieces were measured for their physical properties in the same manner as in Example 1. Tables 1 and 3 show the results.

**Table 1**

| | Ex. 1 | Comp. Ex. 1 | Comp. Ex. 2 | Comp. Ex. 3 | Ex. 2 | Ex. 3 |
|---|---|---|---|---|---|---|
| PPE from Referencial Example 1 | 40 | 40 | 40 | 40 | 40 | 40 |
| Nylon-6,6 | 40 | 60 | 20 | 57 | 45 | 35 |
| Nylon-6 | 20 | 0 | 40 | 3 | 15 | 25 |
| Tensile yield strength (kgf/ cm²) MPa | 62.8(640) | 64.7 (660) | 58.8(600) | 64.7(660) | 63.7(650) | 61.8(630) |
| Breaking extension (%) | 110 | 90 | 150 | 100 | 110 | 120 |

| WELD DUMBBELL | | | | | | |
|---|---|---|---|---|---|---|
| Tensile yield strength (kgf/ cm²) MPa | 62.8(640) | 63.7(650) | 58.8(600) | 63.7(650) | 63.7(650) | 61.8(630) |
| Breaking extension (%) | 110 | 40 | 150 | 50 | 90 | 120 |
| Depth of weld portion (µm) | 1.90 | 7.90 | 1.60 | 7.50 | 4.90 | 1.80 |

**Table 2**

| Time for Aging (hr) | | | 0 | 50 | 100 | 200 | 500 |
|---|---|---|---|---|---|---|---|
| Ex. 1 | 120°C | Tensile yield strength MPa (kgf/ cm²) | (640)62.8 | (640)62.8 | (660)64.7 | (650)63.7 | (650)63.7 |
| | | Breaking extension (%) | 110 | 110 | 110 | 90 | 90 |
| | 160°C | Tensile yield strength MPa (kgf/ cm²) | (640)62.8 | (640)62.8 | (660) 64.7 | (650)63.7 | (500)49.0 |
| | | Breaking extension (%) | 110 | 90 | 60 | 20 | 5 |
| Comp. Ex. 1 | 120°C | Tensile yield strength MPa (kgf/ cm²) | (660)64.7 | (660)64.7 | (680)66.7 | (680)66.7 | (690)67.7 |
| | | Breaking extension (%) | 90 | 90 | 90 | 80 | 70 |
| | 160°C | Tensile yield strength MPa (kgf/ cm²) | (660)64.7 | (670)65.7 | (680)66.7 | (670)65.7 | (600)58.8 |
| | | Breaking extension (%) | 90 | 70 | 30 | 10 | 5 |
| Comp. Ex. 2 | 120°C | Tensile yield strength MPa (kgf/ cm²) | (600)58.8 | (600)58.8 | (610)59.8 | (610) 59.8 | (620)60.8 |
| | | Breaking extension (%) | 150 | 150 | 150 | 120 | 60 |
| | 160°C | Tensile yield strength MPa (kgf/ cm²) | (600)58.8 | (600)58.8 | (620)60.8 | (550)53.9 | (440) 43.2 |
| | | Breaking extension (%) | 150 | 60 | 10 | 5 | 3 |

**Table 3**

| Time for Aging (hr) | | | 0 | 50 | 100 | 200 | 500 |
|---|---|---|---|---|---|---|---|
| Comp. Ex. 3 | 120°C | Tensile yield strength MPa (kgf/ cm²) | (660)64.7 | (660)64.7 | (680)66.7 | (680)66.7 | (690)67.7 |
| | | Breaking extension (%) | 100 | 100 | 100 | 90 | 90 |
| | 160°C | Tensile yield strength MPa (kgf/ cm²) | (660)64.7 | (670)65.7 | (680)66.7 | (670)65.7 | (600)58.8 |
| | | Breaking extension (%) | 100 | 80 | 40 | 10 | 5 |
| Ex. 2 | 120°C | Tensile yield strength MPa (kgf/ cm²) | (650)63.7 | (650)63.7 | (660)64.7 | (650)63.7 | (650)63.7 |
| | | Breaking extension (%) | 110 | 110 | 110 | 90 | 90 |
| | 160°C | Tensile yield strength MPa (kgf/ cm²) | (650)63.7 | (650)63.7 | (660)64.7 | (650)63.7 | (500) 49.0 |
| | | Breaking extension (%) | 110 | 90 | 60 | 20 | 5 |
| Ex. 3 | 120°C | Tensile yield strength MPa (kgf/ cm²) | (630)61.8 | (630)61.8 | (650)63.7 | (640) 62.8 | (640)62.8 |
| | | Breaking extension (%) | 120 | 120 | 120 | 100 | 90 |
| | 160°C | Tensile yield strength MPa (kgf/ cm²) | (630)61.8 | (630)61.8 | (650)63.7 | (600)58.8 | (470)46.1 |
| | | Breaking extension (%) | 120 | 80 | 40 | 10 | 5 |

### Examples 4 - 9

40 Parts by weight of the pellets of the maleic anhydride-modified polyphenylene ether obtained in Referential Example 1, 40 parts by weight of nylon-6,6 (Amilan CM-3007-N, a relative viscosity in 98 % sulfuric acid ηᵣ = 2.70, supplied by Toray Industries, Inc.), 20 parts by weight of nylon-6 (Amilan CM-1017, a relative viscosity in 98 % sulfuric acid ηᵣ = 2.65, supplied by Toray Industries, Inc.) and an additive shown in Table 4 were mixed, and the resultant mixture was melt-kneaded and pelletized with a twin-screw extruder at from 240 to 300°C to obtain pellets.

The above-obtained pellets were injection-molded to prepare test pieces, and the test pieces were evaluated on their physical properties. Further, the above pellets were molded into box-shaped articles and measured for releasability from a mold. Furthermore, the above pellets were tested on recycling capability. The molding conditions and test conditions were as follows.
(1) Test pieces: The pellets were injection-molded at a cylinder temperature of 280°C and a mold temperature of 80°C to obtain 3.2 mm (1/8 inch) thick dumbbell test pieces for tensile test and dumbbell test pieces having the same thickness and a weld portion.
(2) Releasability from a mold: Box-shaped articles were molded at a cylinder temperature of 280°C and a mold temperature of 80'C, and the articles were measured for resistance when they were pushed out.
(3) Recycling capability: Dumbbell pieces having a thickness of 3.2mm (1/8 inch) were molded at a cylinder temperature of 280°C and a mold temperature of 80°C. The molded articles were crushed, and again injection-molded under the same conditions to prepare dumbbell pieces having the same thickness. These procedures were taken as one cycle, and this cycle was repeated 10 times.

Tables 4, Table 5 (Example 6 and Comparative Examples 5 and 6) and Table 6 (Example 6) show the results. In Table 6, "Heat resistance tensile strength" and "heat resistance breaking extension" respectively refer to "tensile strength" and "breaking extension" after the test pieces were heat-treated at 160°C for 100 hours.

**Table 4**

| | Additive | Amount (part by weight) | Tensile strength (k/cm²) MPa | Breaking extension (%) | Resistance to release from mold (kg) kN |
|---|---|---|---|---|---|
| Ex.4 | Na montanate | 0.1 | (630)61.8 | 110 | (80)0.78 |
| Ex.5 | Na montanate | 0.2 | (625)61.3 | 105 | (63)0.62 |
| Ex.6 | Na montanate | 0.5 | (620)60.8 | 105 | (52)0.51 |
| Ex.7 | Na montanate | 3.0 | (590)57.9 | 90 | (45)0.44 |
| Comp. Ex.4 | Na montanate | 5.0 | (500) 49.0 | 50 | (43)0.42 |
| Ex.8 | Ca montanate | 0.2 | (630)61.8 | 104 | (65)0.64 |
| Ex.9 | Zn montanate | 0.2 | (620)60.8 | 107 | (70)0.69 |
| Comp. Ex.5 | Na phosphate | 0.5 | (610)59.8 | 100 | (60)0.59 |
| Comp. Ex.6 | Ca stearate | 0.5 | (625)61.3 | 105 | (55)0.54 |
| Comp. Ex.7 | Hoechst Wax E | 0.2 | (600)58.8 | 110 | (86)0.84 |
| Comp. Ex.8 | IR1425WL | 0.2 | (605)59.4 | 105 | (90)0.88 |

**Table 5**

| Test on 100 % recycle test | | | | | | |
|---|---|---|---|---|---|---|
| | Example 6 | | Comp. Ex. 5 | | Comp. Ex. 6 | |
| | Tensile strength (kg/ cm²) MPa | Breaking extension (%) | Tensile strength (kg/ cm²) MPa | Breaking extension (%) | Tensile strength (kg/ cm²) MPa | Breaking extension (%) |
| 0 recycle | (620)60.8 | 105 | (610)59.8 | 100 | (625)61.3 | 105 |
| 1st recycle | (620)60.8 | 103 | (600)58.8 | 98 | (620)60.8 | 103 |
| 2nd recycle | (620)60.8 | 102 | (600)58.8 | 98 | (615)60.3 | 100 |
| 3rd recycle | (615)60.3 | 102 | (590)57.9 | 95 | (610)59.8 | 98 |
| 4th recycle | (615)60.3 | 100 | (580)56.9 | 93 | (590)57.9 | 95 |
| 5th recycle | (600)58.8 | 98 | (570)55.9 | 90 | (570)55.9 | 92 |
| 6th recycle | (600)58.8 | 96 | (550)53.9 | 85 | (550)53.9 | 87 |
| 7th recycle | (595) 58.4 | 95 | (505) 49.6 | 70 | (530) 52.0 | 80 |
| 8th recycle | (580)56.9 | 93 | (480)47.1 | 55 | (500)49.1 | 70 |
| 9th recycle | (585) 57.4 | 92 | (450)44.2 | 53 | (450) 44.2 | 65 |
| 10th recycle | (585)57.4 | 90 | (400)39.2 | 50 | (420)41.2 | 55 |

### Comparative Example 9

40 Parts by weight of thee pellets of the maleic anhydride-modified polyphenylene ether obtained in Referential Example 1, 60 parts by weight of nylon-6,6 (Amilan CM-3007-N, supplied by Toray industries, Inc.) and 0.5 part by weight of sodium montanate were mixed, and the resultant mixture was melt-kneaded and pelletized with a twin-screw extruder at from 240 to 300°C to obtain pellets. The pellets were injection-molded to prepare test pieces in the same manner as in Example 1, and the test pieces were measured for their physical properties in the same manner as in Example 1. Table 6 shows the results.

### Comparative Example 10

40 Parts by weight of the pellets of the maleic anhydride-modified polyphenylene ether obtained in Referential Example 1, 20 parts by weight of nylon-6,6 (Amilan CM-3007-N, supplied by Toray Industries, Inc.), 40 parts by weight of nylon-6 (Amilan CM-1017, supplied by Toray Industries, Inc.) and 0.5 part by weight of sodium montanate were mixed, and the resultant mixture was melt-kneaded and pelletized with a twin-screw extruder at from 240 to 300°C to obtain pellets. The pellets were injection-molded to prepare test pieces in the same manner as in Example 1, and the test pieces were measured for their physical properties in the same manner as in Example 1. Table 6 shows the results.

### Comparative Example 11

40 Parts by weight of the pellets of the maleic anhydride-modified polyphenylene ether obtained in Referential Example 1, 57 parts by weight of nylon-6,6 (Amilan CM-3007-N, supplied by Toray Industries, Inc.), 3 parts by weight of nylon-6 (Amilan CM-1017, supplied by Toray Industries, Inc.) and 0.5 part by weight of sodium montanate were mixed, and the resultant mixture was melt-kneaded and pelletized with a twin-screw extruder at from 240 to 300°C C to obtain pellets. The pellets were injection-molded to prepare test pieces in the same manner as in Example 1, and the test pieces were measured for their physical properties in the same manner as in Example 1. Table 6 shows the results.

### Example 10

40 Parts by weight of the pellets of the maleic anhydride-modified polyphenylene ether obtained in Referential Example 1, 45 parts by weight of nylon-6,6 (Amilan CM-3007-N, supplied by Toray Industries, Inc.), 15 parts by weight of nylon-6 (Amilan CM-1017, supplied by Toray Industries, Inc.) and 0.5 part by weight of sodium montanate were mixed, and the resultant mixture was melt-kneaded and pelletized with a twin-screw extruder at from 240 to 300°C to obtain pellets. The pellets were injection-molded to prepare test pieces in the same manner as in Example 1, and the test pieces were measured for their physical properties in the same manner as in Example 1. Table 6 shows the results.

### Example 11

40 Parts by weight of the pellets of the maleic anhydride-modified polyphenylene ether obtained in Referential Example 1, 35 parts by weight of nylon-6,6 (Amilan CM-3007-N, supplied by Toray Industries, Inc.), 25 parts by weight of nylon-6 (Amilan CM-1017, supplied by Toray Industries, Inc.) and 0.5 part by weight of sodium montanate were mixed, and the resultant mixture was melt-kneaded and pelletized with a twin-screw extruder at from 240 to 300°C to obtain pellets. The pellets were injection-molded to prepare test pieces in the same manner as in Example 1, and the test pieces were measured for their physical properties in the same manner as in Example 1 Table 6 shows the results.

**Table 6**

| | Ex. 6 | Comp Ex. 9 | Comp Ex.10 | Comp. Ex 11 | Ex.10 | Ex.11 |
|---|---|---|---|---|---|---|
| PPE from Referential Example 1 | 40 | 40 | 40 | 40 | 40 | 40 |
| Nylon-6,6 | 40 | 60 | 20 | 57 | 45 | 35 |
| Nylon-6 | 20 | 0 | 40 | 3 | 15 | 25 |
| Na montanate | 0.5 | 0.5 | 0.5 | 0.5 | 0.5 | 0.5 |
| Tensile yield strength (kg/ cm²) MPa | (620) 60.8 | (650) 63.7 | (590)57.9 | (640)62.8 | (635)62.3 | (625) 61.3 |
| Breaking extension (%) | 105 | 85 | 135 | 100 | 105 | 110 |
| Weld tensile strength (kg/ cm²) MPa | (615)60.3 | (640)62.8 | (585)5.4 | (630)61.8 | (630)61.8 | (620)60.8 |
| Weld breaking extension (%) | 105 | 40 | 130 | 40 | 95 | 105 |
| Resistance to release from mold (kg) kN | (52)0.51 | (55)0.54 | (53)0.52 | (57)0.56 | (57)0.56 | (55)0.54 |
| Heat resistance tensile strength (kg/cm²) MPa | (640)62.8 | (670)65.7 | (605)59.4 | (660)64.7 | (650)63.7 | (630)61.8 |
| Heat resistance breaking extension (%) | 65 | 20 | 10 | 30 | 60 | 50 |

## Claims

1. A polyphenylene ether/polyamide resin composition comprising:
(A) polyphenylene ether modified with a compound containing (a) an ethylenically unsaturated double bond and (b) either a carboxyl group or an acid anhydride group,
(B) nylon-6,6 and
(C) nylon-6
on the basis of the total amount of components (A), (B) and (C), the amount of component (A) being from 20 to 70% by weight and the total amount of components (B) and (C) being from 30 to 80% by weight; and the amount of component (C) per 100 parts by weight of component (B) being from 20 to 80 parts by weight, wherein the relative viscosity of (B) and (C) measured in 98% sulphuric acid is from 2.2 to 3.2.

2. A composition according to claim 1 further comprising (D) a montanic acid metal salt in an amount of from 0.1 to 3 parts by weight per 100 parts by weight of the total amount of components (A), (B) and (C).

3. A composition according to claim 1 or 2, wherein the polyphenylene ether of component (A) is obtainable by polycondensation of at least one monocyclic phenol of formula (1), 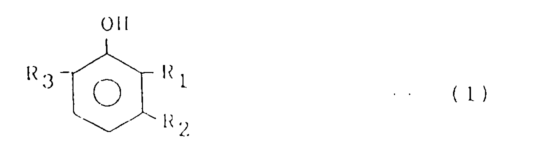 wherein R₁ is C₁-C₃ alkyl, and each of R₂ and R₃ is independently hydrogen or C₁-C₃ alkyl, or a graft copolymer obtainable by grafting a vinyl aromatic compound onto a said polyphenylene ether.

4. A composition according to claim 1, 2 or 3 wherein the polyphenylene ether of component (A) is modified with α, β-unsaturated dicarboxylic acid, α,β-unsaturated monocarboxylic acid, or an anhydride thereof.

5. A composition according to any one of the preceding claims, wherein the polyphenylene ether of component (A) is modified with from 0.01 to 10 parts by weight of an unsaturated carboxylic acid per 100 parts by weight of the polyphenylene ether.

6. A composition according to any one of the preceding claims, wherein on the basis of the total amount of components (A), (B) and (C), the amount of component (A) is from 30 to 60% by weight, and the total amount of components (B) and (C) is from 40 to 70% by weight.

7. A resin composition according to any one of the preceding claims, further comprising an elastomer.

8. A composition according to any one of claims 2 to 7 comprising a montanic acid metal salt (D) chosen from sodium montanate, potassium montanate, lithium montanate, calcium montanate, zinc montanate, barium montanate and aluminium montanate.

9. A composition according to any one of claims 2 to 8 comprising a montanic acid metal salt (D) in an amount of from 0.2 to 1 part by weight per 100 parts by weight of the total amount of the components (A), (B) and (C).

10. A moulded article comprising a composition as claimed in any one of the preceding claims.

## Patentansprüche

1. Polyphenylenether/Polyamid-Harzmasse, umfassend
(A) Polyphenylenether, der mit einer Verbindung modifiziert ist, enthaltend (a) eine ethylenisch ungesättigte Doppelbindung und (b) entweder eine Carboxylgruppe oder eine Säureanhydridgruppe,
(B) Nylon 6-6 und
(C) Nylon 6,
wobei auf der Basis der Gesamtmenge der Komponenten (A), (B) und (C) die Menge an Komponente (A) 20 bis 70 Gew.-%, und die Gesamtmenge der Komponenten (B) und (C) 30 bis 80 Gew.-% beträgt und die Menge der Komponente (C) auf 100 Gewichtsteile der Komponente (B) 20 bis 80 Gewichtsteile beträgt, wobei die relative Viskosität von (B) und (C), gemessen in 98 %iger Schwefelsäure, 2,2 bis 3,2 ist.

2. Masse nach Anspruch 1, umfassend ferner (D) ein Montansäuremetallsalz in einer Menge von 0,1 bis 3 Gewichtsteilen auf 100 Gewichtsteile der Gesamtmenge der Komponenten (A), (B) und (C).

3. Masse nach Anspruch 1 oder 2, wobei der Polyphenylenether der Komponente (A) erhältlich ist durch Polykondensation wenigstens eines monocyclischen Phenols der Formel (1), 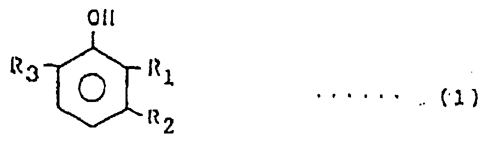 wobei R₁ C₁- bis C₃-Alkyl ist, und jedes R₂ und R₃ unabhängig Wassserstoff 3 oder C₁- bis C₃-Alkyl ist, oder ein Propf-Copolymer, erhältlich durch Aufpfropfen einer vinylaromatischen Verbindung auf den Polyphenylenether.

4. Masse nach Anspruch 1, 2 oder 3, wobei der Polyphenylenether der Komponente (A) modifiziert ist mit einer α,β-ungesättigten Dicarbonsäure, α,β-ungesättigten Monocarbonsäure oder einem Anhydrid davon.

5. Masse nach einem der vorangehenden Ansprüche, wobei der Polyphenylenether der Komponente (A) mit 0,01 bis 10 Gewichtsteilen einer ungesättigten Carbonsäure auf 100 Gewichtsteile des Polyphenylenethers modifiziert ist.

6. Masse nach einem vorangehenden Ansprüche, wobei auf der Basis der Gesamtmenge der Komponenten (A), (B) und (C) die Menge der Komponente (A) 30 bis 60 Gew.-% beträgt und die Gesamtmenge der Komponenten (B) und (C) 40 bis 70 Gew.-% beträgt.

7. Harzmasse nach einem der vorangehenden Ansprüche, umfassend ferner ein Elastomer.

8. Masse nach einem der Ansprüche 2 bis 7, umfassend ein Montansäuremetallsalz (D), ausgewählt aus Natriummontanat, Kaliummontanat, Lithiummontanat, Calciummontanat, Zinkmontanat, Bariummontanat und Aluminiummontanat.

9. Masse nach einem der Ansprüche 2 bis 8, umfassend ein Montansäuremetallsalz (D) in einer Menge von 0,2 bis 1 Gewichtsteil auf 100 Gewichtsteile der Gesamtmenge der Komponenten (A), (B) und (C).

10. Formkörper, umfassend eine Masse nach einem der vorangehenden Ansprüche.

## Revendications

1. Composition de résine à base de poly(phénylène éther) et de polyamide, comprenant :
(A) un poly(phénylène éther) modifié avec un composé qui comporte (a) une double liaison constituant une insaturation éthylénique et (b) un groupe carboxyle ou un groupe anhydride d'acide,
(B) un nylon 6,6 et
(C) un nylon 6,
la quantité du composant (A) valant de 20 à 70 % en poids et la quantité totale des composants (B) et (C) valant de 30 à 80 % en poids par rapport à la quantité totale des composants (A), (B) et (C) ; et la quantité du composant (C), pour 100 parties en poids du composant (B) valant de 20 à 80 parties en poids, dans laquelle la viscosité relative de (B) et de (C), mesurée dans l'acide sulfurique à 98 %, est comprise entre 2,2 et 3,2.

2. Composition selon la revendication 1, comprenant en outre (D) un sel métallique d'acide montanique en une quantité de 0,1 à 3 parties en poids pour 100 parties en poids de la quantité totale des composants (A), (B) et (C).

3. Composition selon la revendication 1 ou 2, dans laquelle le poly(phénylène éther) du composant (A) peut être obtenu par polycondensation d'au moins un phénol monocyclique répondant à la formule (1) : 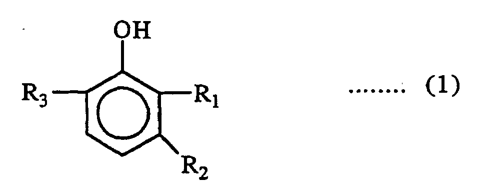 dans laquelle R₁ représente un groupe alkyle en C₁-C₃ et chacun des R₂ et R₃ représente indépendamment un atome d'hydrogène ou un groupe alkyle en C₁-C₃, ou il est un copolymère de greffage pouvant être obtenu par greffage d'un composé vinylique aromatique sur ledit poly(phénylène éther).

4. Composition selon la revendication 1, 2 ou 3, dans laquelle le poly(phénylène éther) du composant (A) est modifié avec un acide dicarboxylique insaturé en α et β, un acide monocarboxylique insaturé en α et β ou un anhydride de ces derniers.

5. Composition selon l'une quelconque des précédentes revendications, dans laquelle le poly(phénylène éther) du composant (A) est modifié avec 0,01 à 10 parties en poids d'un acide carboxylique insaturé pour 100 parties en poids du poly(phénylène éther).

6. Composition selon l'une quelconque des précédentes revendications, dans laquelle, par rapport à la quantité totale des composants (A), (B) et (C), la quantité du composant (A) vaut de 30 à 60 % en poids et la quantité totale des composants (B) et (C) vaut de 40 à 70 % en poids.

7. Composition de résine selon l'une quelconque des revendications, comprenant en outre un élastomère.

8. Composition selon l'une quelconque des revendications 2 à 7, comprenant un sel métallique d'acide montanique (D) choisi parmi le montanate de sodium, le montanate de potassium, le montanate de lithium, le montanate de calcium, le montanate de zinc, le montanate de de baryum et le montanate d'aluminium.

9. Composition selon l'une quelconque des revendications 2 à 8, comprenant un sel métallique d'acide montanique (D) en une quantité allant de 0,2 à 1 partie en poids pour 100 parties en poids de la quantité totale des composants (A), (B) et (C).

10. Article moulé comprenant une composition selon l'une quelconque des précédentes revendications.
